(19) Europäisches Patentamt
European Patent Office
Office européen des brevets

(11) EP 4 574 891 A1

# (12) EUROPEAN PATENT APPLICATION

(43) Date of publication:
**25.06.2025 Bulletin 2025/26**

(21) Application number: **23218242.8**

(22) Date of filing: **19.12.2023**

(51) International Patent Classification (IPC):
***C08L 23/02*** *(2025.01)*

(52) Cooperative Patent Classification (CPC):
(C-Sets available)
**C08L 23/0815;** C08L 2205/025 (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicants:
- **Abu Dhabi Polymers Co. Ltd (Borouge) - Sole Proprietorship L.L.C.**
  **Abu Dhabi (AE)**
- **Borealis AG**
  **1020 Vienna (AT)**

(72) Inventors:
- **BALKRISHNA, Umesh**
  **Abu Dhabi (AE)**
- **KUMAR, Ashish**
  **Abu Dhabi (AE)**
- **FAWAZ, Joel**
  **4021 Linz (AT)**
- **KUMAR KALIAPPAN, Senthil**
  **Abu Dhabi (AE)**
- **SANARES, Enrico**
  **Abu Dhabi (AE)**
- **RAO KONA, Balakantha**
  **049145 Singapore (SG)**

(74) Representative: **Kador & Partner Part mbB**
**Corneliusstraße 15**
**80469 München (DE)**

## (54) POLYETHYLENE COMPOSITIONS HAVING IMPROVED RHEOLOGICAL PROPERTIES

(57) The present invention relates to a polyethylene composition with improved rheological properties, while maintaining thermal properties and mechanical properties, the polyethylene composition having a $MFR_5$ (5.0 kg, 190 °C, ISO 1133) of 0.1 to 4.0 g/10min, and a viscosity at a constant shear stress of 747 Pa, $eta_{747}$, of equal to or more than 130 kPa.s, said polyethylene composition being obtainable or obtained by a process comprising the steps of a) providing a polyethylene base resin (A) having a $MFR_5$ (5.0 kg, 190 °C, ISO 1133) of 0.1 to 3.0 g/10min and optionally comprising a content of one or more $C_3$ to $C_{12}$ alpha-olefin co-monomer(s) of from 1 to 10 wt.-%, based on the total weight of the polyethylene base resin (A), preferably further melting the polyethylene base resin (A) in an extruder, b) mixing said polyethylene base resin (A) in an amount of from 73.5 to 99.99 wt.-% with a radical initiator (B), selected from the group consisting of the peroxy compounds according to formulae (I) to (III), in an amount of from 0.01 to 1.5 wt.-%, based on the total weight of a resulting mixture, and any mixtures thereof, preferably melt mixing said polyethylene base resin (A) with the radical initiator (B) in a melt mixing device, such as an extruder; and c) reacting said polyethylene base resin (A) and the radical initiator (B) at a temperature within the range of from 150 to 300 °C, thereby obtaining the polyethylene composition. The present invention further relates to a process for producing the polyethylene composition, to articles comprising the polyethylene composition, and to the use of the polyethylene composition for making an article, preferably a pipe or a supplementary pipe article.

EP 4 574 891 A1

(52) Cooperative Patent Classification (CPC): (Cont.)

C-Sets
**C08F 8/00, C08F 110/02;**
**C08F 8/00, C08F 210/02;**
**C08L 23/0815, C08L 23/06;**
**C08L 23/0815, C08L 23/0815**

## Description

The present invention relates to a polyethylene composition with improved rheological properties, while maintaining thermal properties and mechanical properties.

## Background Art

Melt strength is directly connected to the rheological properties of a polyolefin composition. Thereby, certain limits to rheological properties such as melt flow rate or viscosity are imposed by the polymerization catalyst used for polymerizing a polyolefin resin as polymerization catalysts, especially Ziegler-Natta catalysts usually only allow the polymerization of polyolefin resins with certain limits to their molecular weight. Additionally, sequential multi-stage polymerization processes in which two or more polymerization reactors are connected in series to allow the polymerization of multimodal polyolefin resins impose limits to the melt strength of the polyolefin compositions. For increasing the molecular weight of a polyolefin resin in a multistage process the split of the polymerization stage in which the high molecular weight polyolefin component, usually a gas phase reactor stage, has to be increased. However, increase of the gas phase reactor split to increase the molecular weight and the melt strength of a polyolefin composition has a detrimental effect on other properties of the polyolefin composition such as mechanical strength, or impact resistance.

For increasing the viscosity of a polymer at a constant shear stress of 747 Pa, $eta_{747}$, the melt flow rate needs to be lowered. Further reduction in MFR is limited by molecular weight potential (Hydrogen response) of the catalyst. Due to this limitation during the production process of polymer, the polymer design is restricted to higher gas phase reactor (GPR) split so that minimum hydrogen flow control is available for melt flow control. This limits the lowest melt flow which can be produced from a multistage process. Restriction to GPR split also limits the property balance needed, namely short-term hydrostatic pressure resistance for mechanical strength and slow crack growth resistance.

Ziegler-Natta (ZN) catalysts to improve sagging resistance measured as $eta_{747}$ are known e.g. from WO 2004/055068 A1, WO 2004/055069 A1 and EP 0 810 235 A1. Particularly preferred Ziegler-Natta catalysts are described in EP 2 894 195 B1.

Therefore, there is need for development of new methods and processes which can overcome the restrictions encountered by ZN catalyst. Further objects are the ease of processing and manufacture of various products.

Hence one way to overcome the above limitations is the use of a heat and shear induced twin screw compounding process with a specific additive. Modification of the viscosity of polyolefins has been proposed by such a heat and shear induced compounding process.

Crosslinking technology is an important technology to improve the performance of polyethylene (PE).One technology utilizes free radical chemistry. One such process is to modify polymer backbone by subjecting polymers with high energy radiation, wherein C-H bonds are cleaved on the main chain leading to reactive radicals. The commercial limitations of this technology are however, the high capital investment needed for expensive irradiation equipment and the restrictions imposed on article thickness and on achieving uniform crosslinking with articles of irregular shape.

Another technology to modify the polymer backbone is by chemical modification. Use of radical initiators such as organic peroxides leads to secondary or tertiary radicals hence facilitating the backbone modification. However these methods rely on the random combination of a so-called main chain radical to modify the backbone and there is competition for branching, or grafting or the chain scission. It is also known that due to chain scission a number of byproducts and a number of undesired oxygen-containing byproducts are formed which could also be potentially toxic. Therefore identifying the appropriate peroxide molecule that does not decompose to toxic by-products is important especially for drinking water or food contact applications.

Suitable peroxide typically organic peroxides that are compatible with polyolefin monomers are used for crosslinking. Examples of such organic peroxides include alkyl peroxides, alkenyl peroxides, alkynyl peroxides. Exemplary organic peroxides that may be used in the polymeric pipes of the invention include di-tert- butyl peroxide (Trigonox® B), 2,5-dimethyl-2,5-di(tert-butylperoxy)hexyne-3 (Trigonox® 145), 3,3,5,7,7-pentamethyl-1 ,2,4-trioxepane (Trigonox® 31 1 ), 2,5-dimethyl-2,5-di(tert- butylperoxy)hexane (Trigonox® 101) and 3,6,9-triethyl-3,6,9,-trimethyl-1 ,4,7-triperoxonane (Trigonox® 301).

To overcome the above disadvantages, it was found that an improved polyethylene composition can be obtained by mixing and reacting a polyethylene base resin with a specific radical initiator to achieve the above objects and overcomes the constraints of using expensive irradiation equipment for getting uniform crosslinking in polyethylene.

## Summary of the Invention

Thus, the present invention provides a polyethylene composition having a $MFR_5$ (5.0 kg, 190 °C, ISO 1133) of 0.1 to 4.0 g/10min, and a viscosity at a constant shear stress of 747 Pa, $eta_{747}$, determined as described in the experimental section below, of equal to or more than 130 kPa.s, said polyethylene composition being obtainable or obtained by a

process comprising the steps of:

a) providing a polyethylene base resin (A) having a $MFR_5$ (5.0 kg, 190 °C, ISO 1133) of 0.1 to 3.0 g/10min and optionally comprising a content of one or more $C_3$ to $C_{12}$ alpha-olefin co-monomer(s) of from 1 to 10 wt.-%, based on the total weight of the polyethylene base resin (A), preferably further melting the polyethylene base resin (A) in an extruder;

b) mixing said polyethylene base resin (A) in an amount of from 73.5 to 99.99 wt.-% with a radical initiator (B), selected from the group consisting of the peroxy compounds according to the following formulae (I) to (III), in an amount of from 0.01 to 1.5 wt.-%, based on the total weight of a resulting mixture

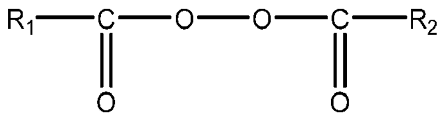

(I),

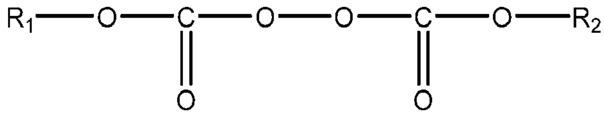

(II),

and

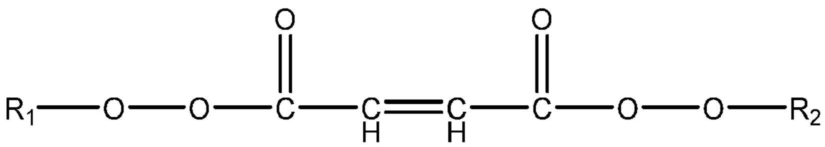

(III),

and any mixtures thereof, wherein $R_1$ and $R_2$ are each independently selected from alkyl groups having from 4 to 30 carbon atoms, and which may be cyclic, linear, branched or unbranched, wherein $R_1$ and $R_2$ may be the same or different, preferably melt mixing said polyethylene base resin (A) with the radical initiator (B) in a melt mixing device, such as an extruder; and

c) reacting said polyethylene base resin (A) and the radical initiator (B) at a temperature within the range of from 150 to 300 °C, preferably of from 160 to 280 °C, more preferably of from 180 to 260 °C, thereby obtaining the polyethylene composition

The above objects are further achieved by a process for producing a crosslinkable polyethylene composition comprising the above steps a) to c).

The above objects are further achieved by an article comprising the above polyethylene composition which preferably is a pipe or a supplementary pipe article or a film, wherein the article preferably has improved hydrostatic pressure resistance.

The above objects are further achieved by the use of the above polyethylene composition for making an article, preferably a pipe or a supplementary pipe article.

**Detailed Description of the Invention**

Surprisingly, a novel polyethylene composition for achieving the above issues was found that is obtainable or obtained in the presence of a specific radical initiator. This initiator is an FDA approved organic peroxide highly suitable to produce a low-density polyethylene, preferably a foam. Preferably, a specific co-agent may be added to the polyethylene composition of the present invention. This co-agent may be at least one conjugated or non-conjugated, linear or branched diene. When applying shear induced compounding processing conditions the constraints of using expensive irradiation equipment are overcome for achieving uniform crosslinking in polyethylene.

A polyethylene resin according to the present invention denotes a polymer derived from at least 50 mol% ethylene monomer units and additional comonomer units.

An ethylene homopolymer thereby denotes a polymer consisting essentially of ethylene monomer units. Due to

the requirements of large-scale polymerization it may be possible that the ethylene homopolymer includes minor amounts of comonomer units, which usually is below 0.1 mol%, preferably below 0.05 mol%, most preferably below 0.01 mol% of the ethylene homopolymer.

An ethylene copolymer denotes a polymer consisting of ethylene monomer units and comonomer units in an amount of at least 0.1 mol%. In an ethylene random copolymer the comonomer units are randomly distributed in the polymer chain.

**Polyethylene base resin (A)**

The polyethylene base resin (A) can be unimodal, bimodal or multimodal.

Multimodal resins are frequently used e.g. for the production of pipes due to their favorable physical and chemical properties as e.g. mechanical strength, corrosion resistance and long-term stability. Such compositions are described e.g. in EP 0 739 937 and WO 02/102891. The term molecular weight used herein generally denotes the weight average molecular weight Mw.

Usually a polyolefin resin used for pipe or injection moulding applications comprises at least two polyolefin fractions, which have been produced under different polymerization conditions resulting in different weight average molecular weights for the fractions, is referred to as "multimodal". The prefix "multi" relates to the number of different polymer fractions the composition is consisting of. Thus, for example, a polyolefin resin consisting of two fractions only is called "bimodal".

The form of the molecular weight distribution curve, i.e. the appearance of the graph of the polymer weight fraction as function of its molecular weight, of such a multimodal polyolefin will show two or more maxima or at least be distinctly broadened in comparison with the curves for the individual fractions.

For example, if a polymer is produced in a sequential multistage process, utilizing reactors coupled in series and using different conditions in each reactor, the polymer fractions produced in the different reactors will each have their own molecular weight distribution and weight average molecular weight. When the molecular weight distribution curve of such a polymer is recorded, the individual curves from these fractions are superimposed into the molecular weight distribution curve for the total resulting polymer product, usually yielding a curve with two or more distinct maxima.

Polyolefin resins which include polyolefin fractions, which do not differ in their molecular weight but in their comonomer content, are also called "multimodal". A polyolefin resin with two fractions differing in their comonomer content thus are also called "bimodal".

A unimodal polyolefin resin only includes one polyolefin fraction which cannot be differentiated in molecular weight or comonomer content. Usually unimodal polyolefin resins are polymerized in a single polymerization stage.

The polyethylene base resin (A) is preferably a copolymer of ethylene and one or more alpha-olefin comonomers, preferably of one or more $C_4$ to $C_{10}$ alpha olefin comonomers.

Preferably, the comonomer is selected from the group of 1-butene, 1-hexene, 4-methyl-1-pentene, 1-octene and 1-decene. Most preferably, the comonomer is 1-butene and/or 1-hexene.

The content of one or more $C_4$ to $C_{12}$ alpha-olefin co-monomer(s) may range from 1 to 10 wt.-%, preferably from 1.5 to 8 wt.-%, more preferably from 2.0 to 7.5 wt.-%, based on the total weight of the polyethylene base resin (A), Moreover, the polyethylene base resin (A) is preferably a multimodal polyethylene resin, more preferably a bimodal polyethylene resin.

It is preferred that the polyethylene base resin (A) consists of two polyethylene fractions, the fraction having a lower weight average molecular weight is denoted low molecular weight fraction, the other is denoted high molecular weight fraction. Both fractions can be homo-and/or copolymer fractions.

The polyethylene base resin (A) has a $MFR_5$ (5.0 kg, 190 °C, ISO 1133) of 0.1 to 3.0 g/10min, preferably of 0.5 to 3.0 g/10min., more preferably 0.6 to 2.0 g/10 min.

Preferably, the polyethylene base resin (A) has a $MFR_{21.6}$ (21.6 kg, 190 °C, ISO 1133) of 1 to 100 g/10 min, more preferably of 2 to 50 g/10 min, and even more preferably 5 to 40 g/10 min.

The flow rate ratio $FRR_{21/5}$ (the ratio between $MFR_{21.6}$ and $MFR_5$) of the polyethylene base resin (A) which is indicative for the broadness of the molecular weight distribution of a polymer is preferably from 5 to 60, more preferably from 15 to 55, even more preferably from 20 to 50.

Preferably, the polyethylene base resin (A) has a density of 920 kg/m$^3$ or more, more preferably of 930 kg/m$^3$ or more, still more preferably of 940 kg/m$^{33}$ or more, still more preferably of 950 kg/m$^3$ or more. The density may also be between 920 to 960 kg/m$^3$.

The polyethylene resin can be selected from linear low density polyethylene (LLDPE) resins, medium density polyethylene (MDPE) resins and high density polyethylene (HDPE) resins.

## Radical initiator (B)

The polyethylene composition of the present invention is obtainable or obtained by mixing and reacting the above polyethylene base resin (A) with a radical initiator (B), selected from the group consisting of the peroxy compounds according to the above formulae (I) to (III), and any mixtures thereof, wherein $R_1$ and $R_2$ are each independently selected from alkyl groups having from 4 to 30 carbon atoms, and which may be cyclic, linear, branched or unbranched; wherein $R_1$ and $R_2$ may be the same or different.

The radical initiator may preferably be selected from the group consisting of di-(2-ethylhexyl) peroxydicarbonate, di-(4-tert-butylcyclohexyl) peroxycarbonate dicetyl peroxydicarbonate, dimyristyl peroxydicarbonate and mixtures thereof. It is particularly preferred that the radical initiator is dicetyl peroxydicarbonate.

The polyethylene composition of the present invention is obtainable or obtained by mixing and reacting the radical initiator (B) in an amount of from 0.01 to 1.5 wt.-%, preferably 0.1 to 1.5 wt.-%, more preferably of from 0.5 to 1.2 wt.-%, each based on the total weight of a resulting mixture.

The above radical initiator may be liquid or solid at room temperature.

The above radical initiator may be added to the polyethylene base resin (A) in the form of a dispersion. The medium in which the initiator according to the invention is dispersed is preferably inert towards the initiator and polar so that the initiator will hardly dissolve in it and the polyethylene base resin (A) is incompatible with it.

The above radical initiator preferably is dispersed in water or an alcohol.

The polyethylene base resin (A) may preferably be physically mixed with the initiator or initiator dispersion below the decomposition temperature of the initiator in a manner known to the skilled person, e.g., in mixers with low or high shearing forces, with the temperature of the initiator preferably being selected below a temperature where the half life of the initiator is 0.1 hour. Preferably, both the polyethylene base resin (A) and the initiator dispersion are kept at a temperature which is lower than a temperature at which the half life of the initiator is 10 hours.

Preferably, the initiator dispersion is mixed with the polyethylene base resin (A) below the decomposition temperature, during and/or after which the temperature is raised, in order to allow the radical initiator to decompose and react with the polyethylene base resin (A) before the base resin has completely melted.

A variety of adjuvants may preferably admixed to the initiator or initiator dispersion to ensure the dispersion's chemical and/or physical stability. Such adjuvants may encompass freezing point depression agents, pH buffers, biocides, chemical stabilisers, thickeners, and/or surfactants. Such adjuvants are described e.g. in WO 97/49759 A1.

The above radical initiator may be added to the polyethylene base resin (A) as such in the amounts as described above or in form of so-called master batch (MB), in which the radical initiator is contained in concentrated form in a carrier polymer.

When the above radical initiator is added in the form of a masterbatch, the masterbatch including the radical initiator and the carrier polymer is present in the above mixing step b) in an amount of 0.05 to 5.0 wt.-%, based on the total amount of a resulting mixture, wherein the amount of the masterbatch is selected so that the amount of the radical initiator (B) is in the above described ranges.

## Co-agent (C)

The polyethylene composition of the present invention may preferably be obtained by further mixing in the above step b) a co-agent (C) which is at least one conjugated or non-conjugated, linear or branched diene, more preferably a diene selected from the group consisting of 1,3-butadiene, 2,4-octadiene 1,7-octadiene, 1,9-decadiene, or any mixtures thereof, and even more preferably 1,7-octadiene.

Further preferred dienes suitable as the co-agent (C) are disclosed in WO 2009/146926 A1.

The co-agent (C) may preferably added in an amount of from 0.1 to 5 wt.%, more preferably 0.1 to 2.0 wt.% relative to the content of ethylene in a resulting mixture.

It has been surprisingly found that the above diene co-agent is capable of enhancing and regulating the rheological properties of the crosslinkable polyethylene composition of the present invention, such as increased viscosity measured by eta747, high melt strength, shear thinning and resistance to sagging.

## Polyethylene composition

The polyethylene composition of the present invention has a $MFR_5$ (5.0 kg, 190 °C, ISO 1133) of 0.1 to 4.0 g/10min, and a viscosity at a constant shear stress of 747 Pa, $eta_{747}$, determined as described in the experimental section below, of equal to or more than 130 kPa•s.

The polyethylene composition preferably has a $MFR_5$ (5.0 kg, 190 °C, ISO 1133) of 0.1 to 3.0 g/10min, more preferably of 0.15 to 2.0 g/10min.

The polyethylene composition of the present invention preferably has a viscosity at a constant shear stress of 747

Pa, $eta_{747}$, of equal to or more than 150 kPa•s, more preferably in the range of from 150 to 1100 kPa•s, even more preferably in the range of from 150 to 900 kPa•s.

The polyethylene composition of the present invention preferably has a melting temperature Tm, determined by differential scanning calorimetry (DSC) as described in the experimental section below, of 122 to 135°C, more preferably of 123 to 135°C.

The polyethylene composition of the present invention preferably has a shear thinning index $SHI_{5/300}$ of equal to or more than 50, more preferably in the range of from 55 to 160, the $SHI_{5/300}$ being determined according to ISO 6721-1 and 6721-10 and as described in the experimental section below.

The polyethylene composition of the present invention preferably has a flow rate ratio $FRR_{21/5}$ of equal to or more than 20. Preferably, the flow rate ratio $FRR_{21/5}$ is equal to or less than 36. The flow rate ratio $FRR_{21/5}$ is the ratio between the melt flow rates $MFR_{21.6}$ and $MFR_5$ (5.0 kg, 190 °C, ISO 1133). The flow rate ratio $FRR_{21/5}$ is indicative for the broadness of the molecular weight distribution of a polymer.

The polyethylene composition of the present invention preferably has a density, determined according to ISO 1183-1:2012, of not less than 915 kg/$m^3$, more preferably in the range of from 915 to 965 kg/$m^3$, even more preferably in the range of from 920 to 960 kg/$m^3$. Thus, the polyethylene may be selected from a linear low density polyethylene (LLDPE), low density polyethylene (LDPE), medium density polyethylene (MDPE) and a high density polyethylene (HDPE).

In addition to the polyethylene base resin (A) and the radical initiator (B), in the above step b) usual additives for utilization with polyolefins may be admixed, such as stabilizers (e.g. antioxidant agents), metal scavengers and/or UV-stabilizers, antistatic agents and utilization agents (such as processing aid agents), more preferably one or more antioxidants. Preferably, the amount of these additives is 10 wt.-% or less, more preferably 8 wt.-% or less, even more preferably 5 wt.-% or below, e.g. an amount in the range of from 0.1 to 10 wt.-%, based on the total weight of a resulting mixture.

The polyethylene composition of the present invention may preferably be obtained in the presence of carbon black in an amount of 1.0 to 10 wt.-%, preferably 1.5 to 9.0 wt.-%, more preferably 1.8 to 8.0 wt.-%, still more preferably 1.8 to 7.0 wt.-%, still more preferably 1.8 to 5.0 wt.-%, still more preferably 1.8 to 4.5 wt.-% and even more preferably 1.8 to 4.0 wt.-%, based on the total amount of a resulting mixture.

Carbon black can be added in the above mixing step b) as such (neat) or in form of so-called master batch (MB), in which carbon black, and optionally further additives as defined above, are contained in concentrated form in a carrier polymer.

## Polymerization process

It is preferred that the polyethylene base resin (A) is an "in-situ"-blend. Such blends are preferably produced in a multistage process. However, an "in-situ"-blend may also be produced in one reaction stage by using two or more different kind of catalyst.

The polymerization catalysts for the production of the polyethylene base resin (A) include coordination catalysts of a transition metal, such as Ziegler-Natta (ZN), metallocenes, non-metallocenes, Cr-catalysts etc. The catalyst may be supported, e.g. with conventional supports including silica, Al-containing supports and magnesium dichloride based supports. Preferably the catalyst is a ZN catalyst, more preferably the catalyst is a non-silica supported ZN catalyst, and most preferably a $MgCl_2$-based ZN catalyst.

The Ziegler-Natta catalyst further preferably comprises a group 4 (group numbering according to new IUPAC system) metal compound, preferably titanium, magnesium dichloride and aluminum.

The catalyst may be commercially available or be produced in accordance or analogously to the literature. For the preparation of the preferable catalyst usable in the invention, reference is made to WO 2004/055068 and WO 2004/055069 of Borealis and EP 0 810 235. Particularly preferred Ziegler-Natta catalysts are described in EP 0 810 235 and WO 99/51646.

The process for polymerizing ethylene or copolymerizing ethylene with the comonomers previously described is known in the art. Such a polymerization process generally comprises at least two successive polymerization stages The polymerization at each stage is generally carried out in solution, slurry, bulk or gas phase. In one particular embodiment the process contains at least one slurry reactor stage and at least one gas phase reactor stage, each stage comprising at least one reactor and all reactors being arranged in cascade. In one particularly preferred embodiment the polymerization process comprises at least one bulk reactor and at least one gas phase reactor arranged in that order. In some preferred processes the process comprises one bulk reactor and at least two gas phase reactors, e.g. two or three gas phase reactors. The process may further comprise pre- and post-reactors. Pre-reactors comprise typically prepolymerization reactors. In this kind of processes high polymerization temperatures are generally used in order to achieve specific properties of the polymers. Typical temperatures in all processes are 70 °C or higher, preferably 80 °C or higher, more preferably 85 °C or higher. The high polymerization temperatures as mentioned above are generally applied either in some or all reactors of the reactor cascade.

The process of the present invention may further be conducted by two or more stage polymerization or by the use of two or more different polymerization catalysts in a one stage polymerization. It is also possible to employ a multi- or dual site catalyst. More preferred options are disclosed e.g. in WO 2009/146926 A1.

## Production of the polyethylene composition

According to the present invention the polyethylene composition of the present invention may be produced by a process comprising the steps of:

a) providing a polyethylene base resin (A) having a $MFR_5$ (5.0 kg, 190 °C, ISO 1133) of 0.1 to 3.0 g/10min and optionally comprising a content of one or more $C_3$ to $C_{12}$ alpha-olefin co-monomer(s) of from 1 to 10 wt.-%, based on the total weight of the polyethylene base resin (A);

b) mixing said polyethylene base resin (A) in an amount of from 73.5 to 99.99 wt.-% with a radical initiator (B), selected from the group consisting of the peroxy compounds according to the following formulae (I) to (III), in an amount of from 0.01 to 1.5 wt.-%, based on the total weight of a resulting mixture,

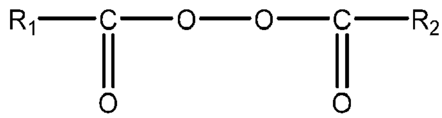
(I),

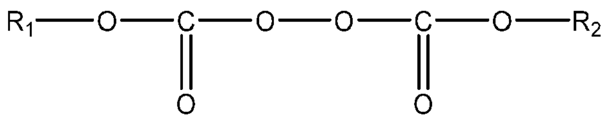
(II),

and

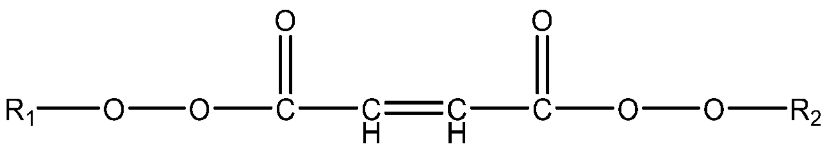
(III),

and any mixtures thereof, wherein $R_1$ and $R_2$ are each independently selected from alkyl groups having from 4 to 30 carbon atoms, and which may be cyclic, linear, branched or unbranched, wherein $R_1$ and $R_2$ may be the same or different, preferably melt mixing said polyethylene base resin (A) with the radical initiator (B) in a melt mixing device, such as an extruder; and

c) reacting said polyethylene base resin (A) and the radical initiator (B) at a temperature within the range of from 150 to 300 °C, preferably of from 160 to 280 °C, more preferably of from 180 to 260 °C, thereby obtaining the polyethylene composition, said polyethylene composition having a $MFR_5$ (5.0 kg, 190 °C, ISO 1133) of 0.1 to 4.0 g/10min, and a viscosity at a constant shear stress of 747 Pa, $eta_{747}$, determined as described herein, of equal to or more than 130 kPa·s.

Preferably, step b) is conducted by melt mixing said polyethylene base resin (A) with the radical initiator (B) in a melt mixing device, such as an extruder.

More preferably, mixing or extrusion step b) is conducted in the presence of 0.1 to 5.0 wt.-%, more preferably 0.1 to 2.0 wt.-% of at least one conjugated or non-conjugated, linear or branched diene, as described above.

It is particularly preferred that in step b) the polyethylene base resin (A)and the radical initiator (B) are melt mixed in a melt mixing device and reacted in step c) at a temperature within the range of from 150 to 300 °C, more preferably at a barrel temperature in the range of 160 to 280°C, even more preferably in the range of from 180 to 280°C.

The mixing or extrusion step b) may preferably be conducted in a single screw extruder or a twin screw extruder.

It is especially preferred that the extruder is a shear-induced extruder.

## Article

Still further, the present invention relates to an article which comprises the polyethylene composition of the present invention or obtainable by the process of the present invention. Preferably, the article comprises the polyethylene composition of the present invention in an amount of at least 90 wt.-%, more preferably 95 wt.-%, even more preferably 99 wt.-%, based on the total weight of the article and still more preferably the article consists of the polyethylene composition of the present invention.

Preferably the article is selected from a pipe, a supplementary pipe article, a film, a blow moulded article or any other extruded article.

The article may preferably have a hydrostatic pressure resistance, determined according to ISO 1167-1:2006, at 12.0 MPa stress and at 20 °C of at least 150 h failure time, more preferably of at least 200 h failure time, even more preferably of at least 300 h failure time, and/or

may preferably have a hydrostatic pressure resistance, determined according to ISO 1167-1:2006, at 5.4 MPa stress and at 80 °C of at least 100 h failure time, more preferably of at least 200 h failure time, even more preferably of at least 248 h failure time.

## Use

The present invention further relates to the use of the polyethylene composition according to the present invention for making an article, preferably a pipe or a supplementary pipe article by compounding, preferably extruding the polyethylene composition together with optional additives as described above.

Preferably, the polyethylene composition according to the present invention may be extruded in the presence of a rheology modifier such as e.g. maleimide derivatives, more preferably hexamethylene-1,6-dimaleimide. Further additives for utilization with polyolefins may be present, such as stabilizers (e.g. antioxidant agents), metal scavengers and/or UV-stabilizers, antistatic agents and utilization agents (such as processing aid agents).

The rheology modifier is preferably present in the polyethylene composition in an amount of up to 0.5 wt.-%, based on the total amount of the reactive polyolefin composition.The further additives mentioned above are preferably present in the polyethylene composition in an amount of up to 10 wt.-% or below.

The polyethylene composition may preferably further comprise carbon black in an amount of 1.0 to 10 wt.-%, based on the total amount of the polyethylene composition.

Further preferred embodiments as to the above ingredients, amounts and the process of compounding and/or extruding the crosslinkable polyethylene composition according to the present invention can be found in WO2019/219902 A1.

Enhanced melt strength is of significant importance for many advanced applications as the melt strength is directly related to the rheological characteristics for the purpose of further polymer processing and product properties. The present invention found that the use of specific radical initiator (B), optionally together with a diene co-agent (C), in the compounding process for preparing a polyethylene composition achieves the polyethylene composition according to the present invention exhibiting superior rheological properties.

The radical initiator (B) according to the invention may act as a chain extender and/or branching initiator and/or partial crosslinker and therefore increases the viscosity at a constant shear stress of 747 Pa, $eta_{747}$ and melt strength of the polymer. Compounding of polyolefin in a shear induced extrusion process using e.g. a twin screw compounding apparatus improves the rheological properties of the polyethylene composition, for example, increasing viscosity measured by $eta_{747}$ by a factor of up to 7, depending on the density of the polyethylene used. $Eta_{747}$ is function of the melt flow rate for a polymer produced using a multimodal process. According to the present invention, it was possible to increase the $eta_{747}$ of a polyethylene composition for a given melt flow rate. Put another way, the improvement of the invention resides in a higher viscosity $eta_{747}$ with simultaneously reducing the melt flow rate of polymer. This surprising behaviour overcomes the constraints in terms of molecular weight potential of the catalyst.

Thus, increase of molecular weight of the desired polymers could be reached independent on a particular design of the polymerization catalyst. The conventional catalyst and polymerization conditions typically used to control the polymer microstructure impose limitations to an improvement of the rheological behaviour of the polyolefin. Thus, the present invention surprisingly enabled to overcome the above limitations to improve the rheological properties of the polyolefin, while a desirable polymer microstructure could be achieved at the same time. The improved eta $_{747}$ and melt strength further leads to an improvement in resistance to sagging by the compositions of the invention. This improvement could be reached even at varying densities and melt flow rates.

The invention is further illustrated by the experimental section and examples given below.

## Examples

## A. Measurement methods

### a) Melt Flow Rate

The melt flow rate (MFR) was determined according to ISO 1133 and is indicated in g/10 min. The MFR is an indication of the flowability, and hence the processability, of the polymer. The higher the melt flow rate, the lower the viscosity of the polymer. The $MFR_5$ of polyethylene was measured at a temperature of 190 °C and a load of 5 kg, the $MFR_{2.16}$ also termed $MFR_2$) of polyethylene at a temperature of 190 °C and a load of 2.16 kg and the $MFR_{21}$ of polyethylene was measured at a temperature of 190 °C and a load of 21.6 kg. The quantity FRR (flow rate ratio) denotes the ratio of flow rates at different loads. Thus, $FRR_{21/5}$ denotes the value of $MFR_{21}/MFR_5$.

### b) Density

Density of the polymer was measured according to ISO 1183-1:2004 Method A on compression moulded specimen prepared according to EN ISO 1872-2 (Feb 2007) and is given in $kg/m^3$.

### c) Comonomer content

Comonomer (1-hexene) content was measured with Fourier transform infrared spectroscopy (FTIR) calibrated with $^{13}C$-NMR as described in EP 2 228 394 A1)

### d) Dynamic Shear Measurements (frequency sweep measurements)

The characterization of polymer melts by dynamic shear measurements complies with ISO standards 6721-1 and 6721-10. The measurements were performed on an Anton Paar MCR301 stress controlled rotational rheometer, equipped with a 25 mm parallel plate geometry. Measurements were undertaken on compression moulded plates using nitrogen atmosphere and setting a strain within the linear viscoelastic regime. The oscillatory shear tests were done at 190°C applying a frequency range between 0.0154 and 500 rad/s and setting a gap of 1.2 mm.

In a dynamic shear experiment the probe was subjected to a homogeneous deformation at a sinusoidal varying shear strain or shear stress (strain and stress controlled mode, respectively). On a controlled strain experiment, the probe was subjected to a sinusoidal strain that can be expressed by

$$\gamma(t) = \gamma_0 \sin(\omega t) \qquad (1)$$

If the applied strain is within the linear viscoelastic regime, the resulting sinusoidal stress response can be given by

$$\sigma(t) = \sigma_0 \sin(\omega t + \delta) \qquad (2)$$

where $\sigma_0$, and $\gamma_0$ are the stress and strain amplitudes, respectively; $\omega$ is the angular frequency; $\delta$ is the phase shift (loss angle between applied strain and stress response); t is the time.

Dynamic test results are typically expressed by means of several different rheological functions, namely the shear storage modulus, G', the shear loss modulus, G", the complex shear modulus, G*, the complex shear viscosity, $\eta^*$, the dynamic shear viscosity, $\eta'$, the out-of-phase component of the complex shear viscosity, $\eta''$, and the loss tangent, tan $\eta$, which can be expressed as follows:

$$G' = \frac{\sigma_0}{\gamma_0} \cos\delta \text{ [Pa]} \qquad (3)$$

$$G'' = \frac{\sigma_0}{\gamma_0} \sin\delta \text{ [Pa]} \qquad (4)$$

$$G^* = G' + iG'' \text{ [Pa]} \qquad (5)$$

$$\eta^* = \eta' - i\eta'' \text{ [Pa·s]} \qquad (6)$$

$$\eta' = \frac{G''}{\omega} \text{ [Pa·s]} \quad (7)$$

$$\eta'' = \frac{G'}{\omega} \text{ [Pa·s]} \quad (8)$$

Besides the above mentioned rheological functions other rheological parameters such as the so-called elasticity index EI(x) were determined. The elasticity index EI(x) is the value of the storage modulus, G', determined for a value of the loss modulus, G", of x kPa and can be described by equation 9.

$$EI(x) = G' \text{ for } (G'' = x \text{ kPa}) \text{ [Pa]} \quad (9)$$

For example, the EI(5 kPa) is defined by the value of the storage modulus G', determined for a value of G" equal to 5 kPa.

The determination of so-called Shear Thinning Indexes was done, as described in equation 10.

$$SHI_{(x/y)} = \frac{\text{Eta* for } (G^* = x \text{ kPa})}{\text{Eta* for } (G^* = y \text{ kPa})} \quad (10)$$

For example, the $SHI_{(0.05/300)}$ is defined by the value of the complex viscosity, in Pa.s, determined for a value of G* equal to 0.05 kPa, divided by the value of the complex viscosity, in Pa.s, determined for a value of G* equal to 300 kPa. Accordingly, the $SHI_{(5/200)}$ is defined by the value of the complex viscosity, in Pa.s, determined for a value of G* equal to 5 kPa, divided by the value of the complex viscosity, in Pa.s, determined for a value of G* equal to 200 kPa. Accordingly, the $SHI_{(2.7/210)}$ is defined by the value of the complex viscosity, in Pa.s, determined for a value of G* equal to 2.7 kPa, divided by the value of the complex viscosity, in Pa.s, determined for a value of G* equal to 210 kPa.

The values of storage modulus (G'), loss modulus (G"), complex modulus (G*) and complex viscosity ($\eta^*$) were obtained as a function of frequency ($\omega$).

Thereby, e.g. $\eta^*_{300rad/s}$ ($eta^*_{300rad/s}$) is used as abbreviation for the complex viscosity at the frequency of 300 rad/s and $\eta^*_{0.05rad/s}$ ($eta^*_{005rad/s}$) is used as abbreviation for the complex viscosity at the frequency of 0.05 rad/s.

The values were determined by means of a single point interpolation procedure, as defined by Rheoplus software. In situations for which a given G* value is not experimentally reached, the value was determined by means of an extrapolation, using the same procedure as before. In both cases (interpolation or extrapolation), the option from Rheoplus *"Interpolate y-values to x-values from parameter"* and the *"logarithmic interpolation type"* were applied.

References:

[1] Rheological characterization of polyethylene fractions" Heino, E.L., Lehtinen, A., Tanner J., Seppälä, J., Neste Oy, Porvoo, Finland, Theor. Appl. Rheol., Proc. Int. Congr. Rheol, 11th (1992), 1, 360-362

[2] The influence of molecular structure on some rheological properties of polyethylene", Heino, E.L., Borealis Polymers Oy, Porvoo, Finland, Annual Transactions of the Nordic Rheology Society, 1995.).

[3] Definition of terms relating to the non-ultimate mechanical properties of polymers, Pure & Appl. Chem., Vol. 70, No. 3, pp. 701-754, 1998.


**e) $Eta_{747}$**

One method which correlates well with the sagging properties, and was used in connection with the present invention relates to the rheology of the polymer and is based on determination of the viscosity of the polymer at a constant shear stress. A shear stress of 747 Pa was selected for this method. The viscosity of the polymer at this shear stress was determined at a temperature of 190 °C and has been found to be inversely proportional to the gravity flow of the polymer, i.e. the greater the viscosity the lower the gravity flow.

The determination of the viscosity at 747 Pa shear stress was made by using a rotational rheometer, which can be a constant stress rheometer as for example an Anton Paar MCR Series Rheometer. Rheometers and their function have

been described in "Encyclopedia of Polymer Science and Engineering", 2nd Ed., Vol. 14, pp. 492-509. The measurements were performed under a constant shear stress between two 25 mm diameter plates (constant rotation direction). The gap between the plates was 1.2 mm.

The sample was temperature conditioned before the measurement was started. The measurement was performed at 190 °C. After temperature conditioning the measurement started by applying the predetermined stress of 747 Pa. The stress was maintained during the measurement time of 1860 s. The $eta_{747}$ parameter was calculated by averaging the last 5 points of the measured transient shear viscosity. These were found to be in the interval from 1620 to 1860 s. Therefore, the $eta_{747}$ was determined at a corresponding time of 1740 s.

The measurement principle applied a certain torque to the plate axis via a precision motor. This torque was then translated into a shear stress in the sample. This shear stress was kept constant. The rotational speed produced by the shear stress was recorded and used for the calculation of the viscosity of the sample.

**f) Tensile modulus (23 °C)**

As a measure for stiffness, the tensile modulus (E-modulus) of the compositions was measured at 23 °C on compression molded specimens according to ISO 527-2:1993. The specimens (1B type) were cut from plaques of 4 mm thickness prepared by compression molding according to ISO 293:2004 using the conditions defined in chapter 3.3 of ISO 1872-2:2007. The modulus was measured at a speed of 1 mm/min.

**g) Tensile properties (23 °C)**

The tensile strength at break and elongation at break (i.e. tensile strain at break) was measured according to ISO 527-1 (cross head speed 50 mm/min) at a temperature of 23 °C.

**h) Charpy Notched Impact Strength**

Charpy impact strength was determined according to ISO179/1eA:2000 on V-notched samples of 80*10*4 $mm^3$ at -20°C (Charpy impact strength (-20 °C)) and at 23°C (Charpy impact strength (23 °C)). Samples were cut from plaques of 4 mm thickness prepared by compression molding according to ISO 293:2004 using the conditions defined in chapter 3.3 of ISO 1872-2:2007.

**i) Melting temperature (Tm) and crystallization temperature (Tcr)**

The melting temperature of the used polymers was measured in accordance with ISO 11357-3. $T_m$ and $T_{cr}$ were measured with TA Instruments Q2000 differential scanning calorimetry (DSC) on 3 $\pm$ 0.5 mg samples. Both crystallization and melting curves were obtained during 10 °C/min cooling and heating scans between 0 and 200 °C. Melting and crystallization temperatures were taken as the peaks of endotherms and exotherms, respectively.

**j) $F_{30}$ Melt Strength**

The test described herein follows ISO 16790:2005. An apparatus according to Fig. 1 of ISO 16790:2005 was used.

The strain hardening behaviour was determined by the method as described in the article "Rheotens-Mastercurves and Drawability of Polymer Melts", M. H. Wagner, Polymer Engineering and Science, Vol. 36, pages 925 to 935. The strain hardening behaviour of polymers was analysed by Rheotens apparatus (product of Göttfert, Siemensstr.2, 74711 Buchen, Germany) in which a melt strand was elongated by drawing down with a defined acceleration.

The Rheotens experiment simulated industrial spinning and extrusion processes. In principle a melt was pressed or extruded through a round die and the resulting strand was hauled off. The stress on the extrudate was recorded, as a function of melt properties and measuring parameters (especially the ratio between output and haul-off speed, practically a measure for the extension rate). For the results presented below, the materials were extruded with a lab extruder Göttfert X-trude 300 system and a gear pump with cylindrical die (LID = 6.0/2.0 mm). For measuring F30 melt strength and v30 melt extensibility, the pressure at the extruder exit (= gear pump entry) was set to 30 bars by by-passing a part of the extruded polymer.

The gear pump was pre-adjusted to a strand extrusion rate of 5 mm/s, and the melt temperature was set to 200°C. The spinline length between die and Rheotens wheels was 100 mm. At the beginning of the experiment, the take-up speed of the Rheotens wheels was adjusted to the velocity of the extruded polymer strand (tensile force zero): Then the experiment was started by slowly increasing the take-up speed of the Rheotens wheels until the polymer filament breaks. The acceleration of the wheels was small enough so that the tensile force was measured under quasi-steady conditions.

The acceleration of the melt strand drawn down is 120 mm/sec2. The Rheotens was operated in combination with the PC program (rheotens). This was a real-time data-acquisition program, which displayed and stored the measured data of tensile force and drawdown speed. The end points of the Rheotens curve (force versus pulley rotary speed), where the polymer strand ruptured, were taken as the F30 melt strength and drawdown velocity.

**k) Strain hardening**

The strain hardening test is a modified tensile test performed at 80 °C on a specially prepared thin sample. The Strain Hardening Modulus (MPa), <Gp>, was calculated from True Strain-True Stress curves; by using the slope of the curve in the region of True Strain, λ, is between 8 and 12.

The true strain, λ, was calculated from the length, l (mm), and the gauge length, $l_0$ (mm), as shown by Equation 1.

$$\lambda = \frac{l}{l_0} = 1 + \frac{\Delta l}{l_0} \qquad (1)$$

where Δl is the increase in the specimen length between the gauge marks, (mm). The true stress, σtrue (MPa), was calculated according to formula 2, assuming conservation of volume between the gauge marks:

$$\sigma_{true} = \sigma_n \lambda \qquad (2)$$

where $\sigma_n$ is the engineering stress.

The Neo-Hookean constitutive model (Equation 3) was used to fit the true strain- true stress data from which <Gp> (MPa) for 8 < λ < 12 was calculated.

$$\sigma_{\mathrm{true}} = \frac{<Gp>}{20}\left(\lambda^2 - \frac{1}{\lambda}\right) + C \qquad (3)$$

where C is a mathematical parameter of the constitutive model describing the yield stress extrapolated to λ = 0.

Initially five specimens were measured. If the variation coefficient of <Gp> was greater than 2,5 %, two extra specimens were measured. In case straining of the test bar took place in the clamps the test result was discarded.

The PE granules of materials were compression molded in sheets of 0.30 mm thickness according to the press parameters as provided in ISO 1872-2, Table 2.

After compression molding of the sheets, the sheets were annealed to remove any orientation or thermal history and maintain isotropic sheets. Annealing of the sheets was performed for 1 h in an oven at a temperature of (120 ± 2) °C followed by slowly cooling down to room temperature by switching off the temperature chamber. During this operation free movement of the sheets was allowed.

Next, the test pieces were punched from the pressed sheets. The specimen geometry of the modified ISO 37:1994 Type 3 (Figure 3) was used.

The sample had a large clamping area to prevent grip slip, dimensions given the below table.

Table: Dimensions of Modified ISO 37:1994 Type 3

| Dimension | | Size (mm) |
|---|---|---|
| L | start length between clamps | 30.0 +/- 0.5 |
| $l_0$ | Gauge length | 12.5 +/- 0.1 |
| $l_1$ | Prismatic length | 16.0 +/- 1.0 |
| $l_3$ | Total length | 70 |
| $R_1$ | Radius | 10.0 +/- 0.03 |
| $R_2$ | Radius | 8.06 +/- 0.03 |
| $b_1$ | Prismatic width | 4.0 +/- 0.01 |
| $b_2$ | Clamp width | 20.0 +/- 1.0 |
| h | Tickness | 0.30 + 0.05/0.30 - 0.03 |

The punching procedure was carried out in such a way that no deformation, crazes or other irregularities were present in the test pieces.

The thickness of the samples was measured at three points of the parallel area of the specimen; the lowest measured value of the thickness of these measurements was used for data treatment.

The following procedure was performed on a universal tensile testing machine having controlled temperature chamber and non-contact extensometer:

1. Condition the test specimens for at least 30 min in the temperature chamber at a temperature of (80 ± 1) °C prior to starting the test.

2. Clamp the test piece on the upper side.

3. Close the temperature chamber.

4. Close the lower clamp after reaching the temperature of (80 ± 1) °C.

5. Equilibrate the sample for 1 min between the clamps, before the load is applied and measurement starts.

6. Add a pre-load of 0.5 N at a speed of 5 mm/min.

7. Extend the test specimen along its major axis at a constant traverse speed (20 mm/min) until the sample breaks.

During the test, the load sustained by the specimen was measured with a load cell of 200 N. The elongation was measured with a non-contact extensometer.

**B. Materials**

The inventive examples (IE) and the comparative examples (CE) were prepared according to the following procedures and with the components indicated below.

The following ethylene polymers were used in the examples and comparative examples:

**Base resin PE1**

A multistage polymerization including a pre-polymerization step, a slurry loop polymerization step, and a gas phase polymerization step was conducted as described in WO 2022/144275 A1 under "2. Examples", item b) and in the presence of a Ziegler-Natta catalyst prepared as described in Example 1 of EP 1 378 528 A1 and in the presence of a TEA co-catalyst. The reaction conditions and properties of the obtained base resin PE1 are shown in the Table 1 below.

**Table 1**

| | **PE1** |
|---|---|
| **Prepolymerizer** | |
| Temperature (°C) | 70 |
| Pressure (bar) | 64 |
| Split (wt.-%) | 1.4 |
| $H_2/C_3$ feed ratio (kg/ton $C_3$) | 0.2 |
| $C_4/C_2$ feed ratio (kg/ton $C_2$) | 40 |
| **Loop** | |
| Temperature (°C) | 85 |
| Pressure (bar) | 64 |
| $C_2$ conc. (mol%) | 2.70 |
| $H_2/C_2$ (mol/kmol) | 390 |
| $C_4/C_2$ (mol/kmol) | 570 |

(continued)

| | |
|---|---|
| **Loop** | |
| $C_4/C_2$ feed ratio (kg/ton $C_2$) | 46 |
| Split (wt.-%) | 39.3 |
| $MFR_2$ (g/10 min) | 300-330 |
| Density (kg/m$^3$) | 951.0-952.0 |
| **Gas phase** | |
| Comonomer | 1-butene |
| Temperature (°C) | 80.0 |
| Pressure (bar) | 19.6 |
| $C_2$ conc. (mol%) | 3.8 |
| $H_2/C_2$ (mol/kmol) | 10.5-11.2 |
| $C_4/C_2$ (mol/kmol) | 743 |
| $C_4/C_2$ feed ratio (kg/ton $C_2$) | 136 |
| Split (wt.-%) | 59.3 |
| Density (kg/m$^3$) (base resin) | 923.0 |
| $MFR_5$ (g/10 min) (base resin) | 0.9-1.0 |

**Base resin PE2**

A multistage polymerization including a pre-polymerization step, a slurry loop polymerization step, and a gas phase polymerization step was conducted as described in WO 2019/219902 A1 under "2. Materials", item b) and in the presence of a Ziegler-Natta catalyst prepared as described in Example 1 of WO 99/51646 A1. The reaction conditions and properties of the obtained base resin PE3 are shown in the Table 2 below.

**Base resin PE3**

A multistage polymerization was conducted as described for PE2 above under the conditions given in Table 2 below, where the properties of the obtained base resin PE3 are shown as well.

**Table 2**

| | **PE2** | **PE3** |
|---|---|---|
| **Prepolymerizer** | | |
| Temperature (°C) | 60 | 70 |
| Pressure (bar) | 65 | 65 |
| Split (wt.-%) | 2 | 2 |
| **Loop** | | |
| Temperature (°C) | 95 | 95 |
| Pressure (bar) | 65 | 65 |
| $H_2/C_2$ (mol/kmol) | 1016 | 1007 |
| $C_2$ conc. (mol%) | 3.8 | 3.9 |
| Production rate (kg/h) | 51.8 | 46.2 |
| Split (incl. prepol.) (wt.-%) | 45 | 42 |
| $MFR_2$ (g/10 min) | 300 | 277 |
| Density (kg/m$^3$) | 972.8 | 972.8 |

(continued)

| Gas phase | | |
|---|---|---|
| Comonomer | 1-hexene | 1-butene |
| Temperature (°C) | 85 | 85 |
| Pressure (bar) | 20 | 20 |
| $H_2/C_2$ (mol/kmol) | 137 | 54.1 |
| $C_6/C_2$ (mol/kmol) | 67.1 | - |
| $C_4/C_2$ (mol/kmol) | - | 197.5 |
| $C_2$ conc. (mol%) | 10 | 10 |
| Production rate (kg/h) | 56.2 | 63.8 |
| Split (wt.-%) | 55 | 58 |
| Density (kg/m$^3$) | 952 | 940 |

As the radical initiator dicetyl peroxydicarbonate (Perkadox® 24L - in the following "Perkadox"), commercially available from Nouryon Functional Chemical B.V., Herkenbosch, The Netherlands was used.
As the diene 1,7-octadiene (in the following "octadiene") commercially available from Evonik Industries AG, Essen, Germany was used.
The following process conditions were used for compounding and extruding the polymer mixtures:

Extruder Machine: Coperion ZSK18 Co-Rotating Twin Screw Extruder

Melt Temperature: 215 to 220 °C

Screw Speed: 300 RPM

Extruder Throughput: 5 kgs/hr.

Extruder Motor Torque: 75 %

The base resins were purged with nitrogen (about 50 kg/h), stabilized with commercial additives and then extruded under the conditions given above. The composition and properties of the compositions are given in the tables below.

**Table 3**

| Process parameters and Polymer properties for CE1, IE1 and IE2 | | | | |
|---|---|---|---|---|
| | | **CE1** | **IE1** | **IE2** |
| PE1 | [wt. %] | 99.80 | 99.30 | 99.10 |
| Additives | [wt. %] | 0.20 | 0.20 | 0.200 |
| Rheology modifier (Perkadox) | [wt. %] | 0.0 | 0.50 | 0.50 |
| Co-agent (1,7-octadiene) | [wt. %] | 0.0 | 0.00 | 0.20 |
| Test properties | | | | |
| Density | kg/m$^3$ | 922.9 | | |
| $MFR_5$ | g/10 min | 1.11 | 0.18 | 0.27 |
| $MFR_{21.6}$ | g/10 min | 25.5 | 6.37 | 9.44 |
| FRR $_{21/5}$ | | 22.9 | 35.4 | 35.5 |
| Die Swell at 5 kg | | 1.45 | | |
| $Eta_{747}$ | kPa.s | 117 | 797 | 816 |

(continued)

| Test properties | | | | |
|---|---|---|---|---|
| Eta (0.05 rad/s) | Pa.s | 49,980 | 115,723 | 102,076 |
| Eta (300 rad/s) | Pa.s | 831 | 955 | 881 |
| Eta (0.05/300) | | 60 | 121 | 116 |
| SHI $_{(2.7/210)}$ | | 41.5 | 107.1 | 132.0 |
| SHI $_{(5/200)}$ | | 28.1 | 60.2 | 64.6 |
| SHI $_{(5/300)}$ | | 63.9 | 151.6 | 159.4 |
| $T_m$ | °C | 122.7 | 124.6 | 124.5 |
| $T_c$ | °C | 110.6 | 114.9 | 115.2 |
| $\Delta H_m$, 2nd heating | J/g | 132 | 130 | 132 |
| $\Delta H_c$ | J/g | 130 | 131 | 133 |
| Melt Strength | mN | 82.9 ± 1.3 | | |
| Extensibility | mm/s | 188.1 ± 5.86 | | |

From Table 3 it is evident that IE1 and IE2 which were prepared with heat and shear induced compounding in presence of dicetyl peroxydicarbonate (Perkadox 24L) as the initiator and octadiene in a low density polyethylene resin, showed high increase in viscosity ($eta_{747}$) compared to CE1. Similarly, shear thinning index ($SHI_{5/300}$) and melt strength increased as well. At the same time, both Tm and Tc increased. It was observed that octadiene, acting as a co-agent (C) works as a nucleating agent as well.

**Table 4-**

| Process parameters and Polymer properties for CE2 and IE3 | | | |
|---|---|---|---|
| | | **CE2** | **IE3** |
| PE2 | [wt. %] | 99.80 | 99.10 |
| Additives | [wt. %] | 0.20 | 0.20 |
| Rheology modifier (Perkadox) | [wt. %] | 0.0 | 0.50 |
| Co-agent (1,7-octadiene) | [wt. %] | 0.0 | 0.20 |
| Test properties | | | |
| Density | kq/m$^3$ | 943.6 | |
| $MFR_{2.16}$ | g/10 min | 0.49 | |
| $MFR_5$ | g/10 min | 1.97 | 0.52 |
| $MFR_{21.6}$ | g/10 min | 41.3 | 16.0 |
| FRR $_{21/2}$ | | 84 | |
| FRR $_{21/5}$ | | 21.0 | 30.7 |
| Die Swell at 5 kg | | 1.44 | |
| $Eta_{747}$ | kPa.s | 39 | 498 |
| Eta (0.05 rad/s) | Pa.s | 28,335 | 64,765 |
| Eta (300 rad/s) | Pa.s | 733 | 799 |
| Eta ($_{0.05/300}$) | | 39 | 81 |
| SHI $_{(2.7/210)}$ | | 29.3 | 70.5 |
| SHI $_{(5/200)}$ | | 21.6 | 41.9 |
| SHI $_{(5/300)}$ | | 47.0 | 98.1 |

(continued)

| Test properties | | | |
|---|---|---|---|
| $T_m$ | °C | 127.9 | 129.8 |
| $T_c$ | °C | 116.8 | 118.1 |
| $\Delta H_m$, 2nd heating | J/g | 191 | 178 |
| $\Delta H_c$ | J/g | 192 | 179 |
| Melt Strength | mN | 54.7 ± 0.9 | |
| Extensibility | mm/s | 192.2 ± 6.69 | |

From Table 4 it is evident that IE3 which was prepared with heat and shear induced compounding in the presence of dicetyl peroxydicarbonate (Perkadox 24L) as an initiator and 1,7-octadiene in a polyethylene resin, showed high increase in viscosity ($eta_{747}$) compared to CE2. Similarly, shear thinning index ($SHI_{5/300}$) increased with simultaneous decrease in $MFR_5$. At the same time, both Tm and Tc increased. It was observed that octadiene, acting as a co-agent (C) works as a nucleating agent as well.

**Table 5**

| Process parameters and Polymer properties for CE3 and IE4 and IE5 | | | | |
|---|---|---|---|---|
| | | **CE3** | **IE4** | **IE5** |
| PE3 | [wt. %] | 93.67 | 93.62 | 93.45 |
| Additives | [wt. %] | 0.33 | 0.33 | 0.33 |
| Rheology modifier (Perkadox) | [wt. %] | 0.0 | 0.05 | 0.20 |
| Co-agent (1,7-octadiene) | [wt. %] | 0.0 | 0.00 | 0.00 |
| Carbon Black | [wt. %] | 6.0 | 6.0 | 6.0 |
| Test properties | | | | |
| Density | $kg/m^3$ | 955.6 | 955.6 | 955.6 |
| $MFR_{2.16}$ | g/10 min | 0.26 | 0.19 | 0.11 |
| $MFR_5$ | g/10 min | 1.01 | 0.86 | 0.62 |
| $MFR_{21.6}$ | g/10 min | 21.6 | 20.0 | 18.1 |
| $FRR_{21/5}$ | | 21 | 23 | 29 |
| $Eta_{747}$ | kPa.s | 66 | 151 | 475 |
| $SHI_{(2.7/210)}$ | | 25.8 | 34.2 | 58.6 |
| $SHI_{(5/200)}$ | | 19.5 | 24.0 | 34.8 |
| $SHI_{(5/300)}$ | | 43.5 | 53.8 | 78.2 |
| Tensile modulus (1 mm/min) | MPa | 936.5 | 930.3 | 928.6 |
| n.m. = not measured | | | | |

From Table 5 it is evident that IE4 and IE5 which were prepared with heat and shear induced compounding in the presence of dicetyl peroxydicarbonate (Perkadox 24L) as an initiator in a medium density polyethylene resin, showed high increase in viscosity ($eta_{747}$) compared to CE3. $MFR_5$ decreased with increased concentration of the initiator. The $MFR_5$ decrease is less pronounced due to modified comonomer composition and comonomer type (here: 1-butene with 4.2 wt.-% for PE3). On the other hand, high values of $eta_{747}$ could be reached for both IE4 and IE5, pronouncing the improved rheological behavior.

Typically, with increased entanglement in the polymer network, stiffness of the polymer increases, however, it is observed that IE5 showed a rather moderate tensile modulus and thus the composition is rather flexible. The composition of IE5 is therefore useful for example for flexible pipe applications.

By the above data it was impressively shown that the inventive polyethylene compositions according to the

present invention showed the following effects and advantages:
By the admixture of the radical initiator (B) the obtained polyethylene resins showed decreased $MFR_5$ (increased molecular weight). This indicates that the viscosities of the polymer resins in the inventive examples increased compared to the respective comparative examples. This could be attributed to potential chain-extension ideally by LCB/ partial crosslinking mechanism caused by the initiator, which tend to increase the chain length and hence, the molecular weight.

Conventionally, melt flow rate reduction is typically done by adjusting hydrogen concentration ratio in the gas phase reactor and by optimization of the polymerization catalyst characteristics. This sets some limiting constraints to the process parameters, especially in the hydrogen feed. Thus, hydrogen as a chain transfer agent has a distinct activating effect for supported catalysts, as much as an order of magnitude, and it eventually reaches a plateau point beyond which polymerization rate is unaffected. In the current process design such MFR changes are limited, and hydrogen cannot be used effectively to decrease MFR or increase molecular weight.

The inventive formulations surprisingly achieved a reduction in melt flow rate of the material at this processing stage. This alleviates the process constraints and enhances the rheological properties, simultaneously. Tables 3 and 4 shows this advantageous behavior while yielding a higher viscosity $eta_{747}$.

The compositions of the invention showed both an increase in flow rate ratio (FRR) and shear thinning index (SHI). Both parameters provide insight on molecular weight distribution of the polymer. As both FRR and SHI have been found to increase, it is expected that the inventive compositions broaden the molecular weight distribution in terms of rheological properties.

The inventive compositions showed a dramatic increase in viscosity ($eta_{747}$). $Eta_{747}$ provides an indication of resistance to sagging exhibited by polymer melt during processing and it is known to be a function of molecular weight. The initiator according to the invention caused chain extensions by LCB and/or by partial cross-linking with the polymer backbone resulting in higher number of chain entanglements and network formation. This increase in $eta_{747}$ is expected to improve the sagging resistance of the compounded materials, as shown in Tables 3 and 4.

The thermal properties of the obtained polyethylene compositions of the invention were not negatively affected, as shown by melting temperature (Tm) and crystallization temperature (Tc) as well as respective melting and crystallization enthalpies $\Delta$Hm, $\Delta$Hc).

## Claims

1. A polyethylene composition having a $MFR_5$ (5.0 kg, 190 °C, ISO 1133) of 0.1 to 4.0 g/10min, and a viscosity at a constant shear stress of 747 Pa, $eta_{747}$, determined as described herein, of equal to or more than 130 kPa•s, said polyethylene composition being obtainable or obtained by a process comprising the steps of:

   a) providing a polyethylene base resin (A) having a $MFR_5$ (5.0 kg, 190 °C, ISO 1133) of 0.1 to 3.0 g/10min and optionally comprising a content of one or more $C_3$ to $C_{12}$ alpha-olefin co-monomer(s) of from 1 to 10 wt.-%, based on the total weight of the polyethylene base resin (A), preferably further melting the polyethylene base resin (A) in an extruder;
   b) mixing said polyethylene base resin (A) in an amount of from 73.5 to 99.99 wt.-% with a radical initiator (B), selected from the group consisting of the peroxy compounds according to the following formulae (I) to (III), in an amount of from 0.01 to 1.5 wt.-%, based on the total weight of a resulting mixture,

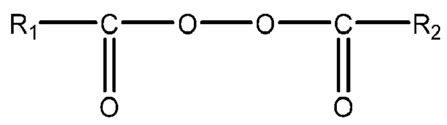

(I),

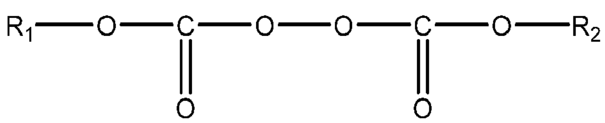

(II),

and

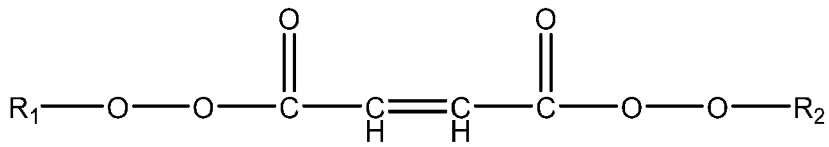 (III),

and any mixtures thereof, wherein $R_1$ and $R_2$ are each independently selected from alkyl groups having from 4 to 30 carbon atoms, and which may be cyclic, linear, branched or unbranched, wherein $R_1$ and $R_2$ may be the same or different, preferably melt mixing said polyethylene base resin (A) with the radical initiator (B) in a melt mixing device, such as an extruder; and

c) reacting said polyethylene base resin (A) and the radical initiator (B) at a temperature within the range of from 150 to 300 °C, preferably of from 160 to 280 °C, more preferably of from 180 to 260 °C, thereby obtaining the polyethylene composition.

**2.** The polyethylene composition according to claim 1, wherein the polyethylene base resin (A) is an ethylene homo- or copolymer and/or wherein the $C_3$ to $C_{12}$ alpha-olefin co-monomer of the polyethylene base resin (A) is selected from the group consisting of 1-butene, 1-hexene, 1-octene and mixtures thereof.

**3.** The polyethylene composition according to claim 1 or 2, wherein the radical initiator (B) is selected from the group consisting of di-(2-ethylhexyl) peroxydicarbonate, di-(4-tert-butylcyclohexyl) peroxydicarbonate, dicetyl peroxydicarbonate, dimyristyl peroxydicarbonate and mixtures thereof.

**4.** The polyethylene composition according to any one of the preceding claims, wherein in step b), the radical initiator is added in an amount of from 0.5 to 1.5 wt.-%, preferably of from 0.5 to 1.2 wt.-%, based on the total weight of a resulting mixture.

**5.** The polyethylene composition according to any one of the preceding claims, wherein in step b), at least one conjugated or non-conjugated, linear or branched diene, preferably 1,3-butadiene, 2,4-octadiene or 1,7-octadiene, or any mixture thereof, is further mixed with the polyethylene base resin (A) and the radical initiator (B), preferably in an amount of from 0.1 to 5 wt.%, relative to the content of ethylene in a resulting mixture and/or
an additive (D) is further mixed with the polyethylene base resin (A) and the radical initiator (B) in an amount within the range of from 0.1 to 10 wt.-%, based on the total weight of a resulting mixture, the additive preferably being an antioxidant.

**6.** The polyethylene composition according to any one of the preceding claims, having a melting temperature Tm, determined by differential scanning calorimetry (DSC) as described herein, of 122 to 135°C.

**7.** The polyethylene composition according to any one of the preceding claims, having a density, determined according to ISO 1183-1:2012, of not less than 915 $kg/m^3$, preferably of from 915 to 965 $kg/m^3$.

**8.** The polyethylene composition according to any one of the preceding claims, having a shear thinning index $SHI_{5/300}$ of equal to or more than 50 and equal to or less than 160, the $SHI_{5/300}$ being determined according to ISO 6721-1 and 6721-10 and as described herein, and/or
having a flow rate ratio $FRR_{21/5}$ of equal to or more than 20 and equal to or less than 36.

**9.** A process for producing a polyethylene composition comprising the following steps:

a) providing a polyethylene base resin (A) having a $MFR_5$ (5.0 kg, 190 °C, ISO 1133) of 0.1 to 3.0 g/10min and optionally comprising a content of one or more $C_3$ to $C_{12}$ alpha-olefin co-monomer(s) of from 1 to 10 wt.-%, based on the total weight of the polyethylene base resin (A);
b) mixing said polyethylene base resin (A) in an amount of from 73.5 to 99.99 wt.-% with a radical initiator (B), selected from the group consisting of the peroxy compounds according to the following formulae (I) to (III), in an amount of from 0.01 to 1.5 wt.-%, based on the total weight of a resulting mixture,

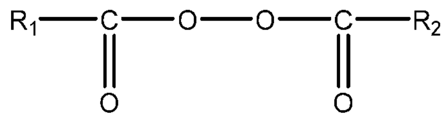

(I),

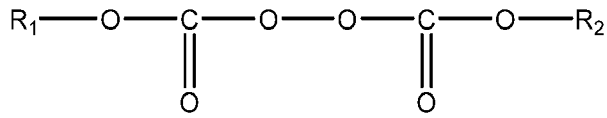

(II),

and

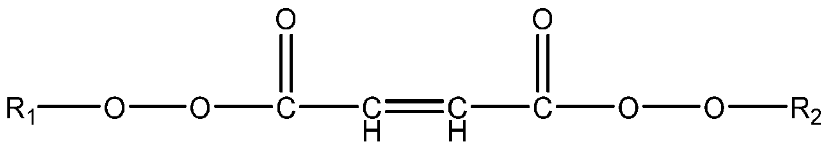

(III),

and any mixtures thereof, wherein $R_1$ and $R_2$ are each independently selected from alkyl groups having from 4 to 30 carbon atoms, and which may be cyclic, linear, branched or unbranched, wherein $R_1$ and $R_2$ may be the same or different, preferably melt mixing said polyethylene base resin (A) with the radical initiator (B) in a melt mixing device, such as an extruder; and

c) reacting said polyethylene base resin (A) and the radical initiator (B) at a temperature within the range of from 150 to 300 °C, preferably of from 160 to 280 °C, more preferably of from 180 to 260 °C, thereby obtaining the polyethylene composition, said polyethylene composition having a $MFR_5$ (5.0 kg, 190 °C, ISO 1133) of 0.1 to 4.0 g/10min, and a viscosity at a constant shear stress of 747 Pa, $eta_{747}$, determined as described herein, of equal to or more than 130 kPa.s.

**10.** The process according to claim 9, wherein in step b), at least one conjugated or non-conjugated, linear or branched diene, preferably 1,3-butadiene, 2,4-octadiene or 1,7-octadiene, or any mixture thereof, is further mixed with the polyethylene base resin (A) and the radical initiator (B), preferably in an amount of from 0.1 to 5 wt.%, relative to the content of ethylene in a resulting mixture.

**11.** The process according to claim 9 or 10, wherein in step c), the polyethylene base resin (A) and the radical initiator (B) are melt mixed in a melt mixing device, such as an extruder, preferably at a barrel temperature in the range of from 160 to 280°C.

**12.** The process according to any one of claims 9 to 11, wherein in step b), the radical initiator (B) is added in an amount of from 0.1 to 1.5 wt.-%, preferably of from 0.5 to 1.5 wt.-%, more preferably of from 0.5 to 1.2 wt.-%, each based on the total weight of a resulting mixture.

**13.** An article comprising the polyethylene composition according to any one of the preceding claims 1 to 8, preferably in an amount of at least 90 wt.-%, based on the total weight of the article.

**14.** The article according to claim 13, which is a pipe or a supplementary pipe article, the article preferably having a hydrostatic pressure resistance, determined according to ISO 1167-1:2006, at 12.0 MPa stress and at 20 °C of at least 150 h failure time, and/or
having a hydrostatic pressure resistance, determined according to ISO 1167-1:2006, at 5.4 MPa stress and at 80 °C of at least 100 h failure time.

**15.** Use of the polyethylene composition according to any one of the preceding claims 1 to 8 for making an article, preferably a pipe or a supplementary pipe article.

Europäisches Patentamt
European Patent Office
Office européen des brevets

# EUROPEAN SEARCH REPORT

Application Number
EP 23 21 8242

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br><br>A | US 10 889 697 B2 (ABU DHABI POLYMERS CO LTD BOROUGE [AE]; BOREALIS AG [AT]) 12 January 2021 (2021-01-12)<br>* column 14, line 59 - column 15, line 27; examples 1-3 *<br>* column 16, line 20 - line 32 *<br>* column 19, line 46 - column 20, line 14 * | 1-8, 13-15<br><br><br>9-12 | INV.<br>C08L23/02 |
| A | US 9 873 783 B2 (BASELL POLYOLEFINE GMBH [DE]) 23 January 2018 (2018-01-23)<br>* examples 3-5; table 3 * | 1-15 | |
| A,D | WO 2022/144275 A1 (ABU DHABI POLYMERS CO LTD BOROUGE [AE]; BOREALIS AG [AT]) 7 July 2022 (2022-07-07)<br>* examples IE1, IE2; tables 1,2 * | 1-15 | |
| | | | TECHNICAL FIELDS SEARCHED (IPC) |
| | | | C08F<br>C08L |

The present search report has been drawn up for all claims

| Place of search | Date of completion of the search | Examiner |
|---|---|---|
| The Hague | 12 June 2024 | Giani, Elena |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 23 21 8242

This annex lists the patent family members relating to the patent documents cited in the above-mentioned European search report. The members are as contained in the European Patent Office EDP file on
The European Patent Office is in no way liable for these particulars which are merely given for the purpose of information.

12-06-2024

| Patent document cited in search report | Publication date | Patent family member(s) | Publication date |
|---|---|---|---|
| US 10889697 B2 | 12-01-2021 | AU 2016284462 A1 | 11-05-2017 |
| | | CN 107108994 A | 29-08-2017 |
| | | EP 3109275 A1 | 28-12-2016 |
| | | KR 20170093124 A | 14-08-2017 |
| | | NZ 731091 A | 31-05-2019 |
| | | US 2018282504 A1 | 04-10-2018 |
| | | WO 2016206768 A1 | 29-12-2016 |
| US 9873783 B2 | 23-01-2018 | BR 112016028579 A2 | 22-08-2017 |
| | | CN 106459527 A | 22-02-2017 |
| | | EP 3161015 A1 | 03-05-2017 |
| | | US 2017183486 A1 | 29-06-2017 |
| | | WO 2015197454 A1 | 30-12-2015 |
| WO 2022144275 A1 | 07-07-2022 | CN 116888208 A | 13-10-2023 |
| | | EP 4019583 A1 | 29-06-2022 |
| | | IL 303944 A | 01-08-2023 |
| | | TW 202231680 A | 16-08-2022 |
| | | US 2024076480 A1 | 07-03-2024 |
| | | WO 2022144275 A1 | 07-07-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2004055068 A1
- WO 2004055069 A1
- EP 0810235 A1
- EP 2894195 B1
- EP 0739937 A
- WO 02102891 A
- WO 9749759 A1
- WO 2009146926 A1
- WO 2004055068 A
- WO 2004055069 A
- EP 0810235 A
- WO 9951646 A
- WO 2019219902 A1
- EP 2228394 A1
- WO 2022144275 A1
- EP 1378528 A1
- WO 9951646 A1


### Non-patent literature cited in the description


- Rheological characterization of polyethylene fractions. **HEINO, E.L.** ; **LEHTINEN, A.** ; **TANNER J.** ; **SEPPÄLÄ, J.** Theor. Appl. Rheol., Proc. Int. Congr. Rheol. Neste Oy, 1992, vol. 1, 360-362
- The influence of molecular structure on some rheological properties of polyethylene. **HEINO, E.L.** Annual Transactions of the Nordic Rheology Society. Borealis Polymers Oy, 1995
- Definition of terms relating to the non-ultimate mechanical properties of polymers. *Pure & Appl. Chem.*, 1998, vol. 70 (3), 701-754
- Encyclopedia of Polymer Science and Engineering, vol. 14, 492-509
- **M. H. WAGNER**. Rheotens-Mastercurves and Drawability of Polymer Melts. *Polymer Engineering and Science*, vol. 36, 925-935